(19) Europäisches Patentamt / European Patent Office / Office européen des brevets

(11) **EP 3 228 608 B1**

(12) **EUROPEAN PATENT SPECIFICATION**

(45) Date of publication and mention of the grant of the patent:
**01.04.2020 Bulletin 2020/14**

(21) Application number: **16305415.8**

(22) Date of filing: **08.04.2016**

(51) Int Cl.:
*C04B 28/02* (2006.01)  *C04B 20/10* (2006.01)
*C04B 40/06* (2006.01)  *C09K 8/467* (2006.01)
*C09K 8/473* (2006.01)

(54) **WELL CEMENTING SLURRY COMPRISING PARTICLES OF EXPANSIVE AGENT COATED WITH PHENOLIC RESIN, METHOD OF PREPARING SUCH A SLURRY AND METHOD OF CEMENTING A WELL**

SCHLICKER ZUM ZEMENTIEREN VON BOHRLÖCHERN ENTHALTEND EIN POLYMERUMMANTELTES TREIBMITTEL, VERFAHREN ZUM HERSTELLEN EINES DERARTIGEN SCHLICKERS UND VERFAHREN ZUM ZEMENTIEREN EINES BOHRLOCHS

BARBOTINE DE CIMENTATION DE PUITS COMPRENANT DES PARTICULES D'AGENT EXPANSIF ENDUITES DE RÉSINE PHÉNOLIQUE, SON PROCÉDÉ DE PRÉPARATION, ET SON PROCÉDÉ DE CIMENTATION D'UN PUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.10.2017 Bulletin 2017/41**

(73) Proprietors:
• **Services Pétroliers Schlumberger**
  **75007 Paris (FR)**
  Designated Contracting States:
  **FR**
• **SCHLUMBERGER TECHNOLOGY B.V.**
  **2514 JG Den Haag (NL)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
• **DROGER, Nicolas**
  **92142 Clamart Cedex (FR)**
• **ALLOUCHE, Mickael**
  **92142 Clamart Cedex (FR)**

(74) Representative: **Schlumberger Intellectual Property Department**
**Parkstraat 83**
**2514 JG Den Haag (NL)**

(56) References cited:
WO-A1-2015/047301   WO-A1-2015/195596
DE-A1- 3 704 783    US-A1- 2001 026 863
US-A1- 2004 147 406  US-A1- 2004 168 801
US-A1- 2012 175 118

**Description**

**BACKGROUND**

The statements in this section merely provide background information related to the present disclosure.

The present disclosure broadly relates to cement and cementing operations.

Hydraulic cement is any substance provided (at least at one time in the manufacturing process) in a powdered or granular form, that when mixed with a suitable amount of water, can form a paste that can be poured or molded to set as a solid mass. In the oil and gas industry, good bonding between set cement and casing, and also between set cement and the formation, are essential for effective zonal isolation. Poor bonding limits production and reduces the effectiveness of stimulation treatments. Communication between zones can be caused by inadequate mud removal, poor cement/formation bonding, expansion and contraction of the casing resulting from internal pressure variations or thermal stresses, and cement contamination by drilling or formation fluids. Under such circumstances a small gap or microannulus may form at the cement/casing interface, the cement/formation interface, or both.

Representative examples of shrinkage-compensating cement are found in US7988782, US20150107493 and US4419136.

Expansive cement has also been used in the oil and gas industry to cement wells. Representative examples of this technology are found in US2465278, US3884710, US4002483, US4797159, US5942031, US6966376, and US14/307430. [ ] Use of expanding agents to cement wells is problematic since the expanding agents known in the art begin hydrating and thus begin to expand as soon as they contact water. Accordingly, if the expanding agent is going to expand the cement after the cement slurry is positioned within the well, the expanding agent cannot be added to the cement slurry mix water. Also, when the expansion agent is added to the slurry, the viscosity and/or yield stress of the slurry may increase before the slurry can be placed and set. This is especially problematic when the cement slurry is exposed to increased temperature conditions such as are frequently encountered downhole in a well. Incorporation of expanding agents thus leads to difficulties in pumping and placement of the slurry, along with complicating job design. ⊥ US 2012/0175118 A1 relates to a gas-generating substance encapsulated by a coating comprising a polymer.

Moreover, since the cement slurry is readily flowable, any hydration of the expanding agent that occurs before the cement begins to set does not contribute to producing a compressive force within the annulus of the well due to the expansion of the set cement.

Various efforts to delay expansion have been suggested. Coating of metal oxide particles with non-hydratable or previously hydrated minerals such as metal carbonates, hydroxides and hydrates was suggested in US4332619, US5741357, EP2169027A1, EP2246408, US7494544, US20020037306, US7670627, but these materials are not activated by pH to begin a delay process which allows for placement in the annulus of the well prior to allowing expansion of the cement. These formulations are also difficult to prepare and have had only limited success. Other general examples of encapsulated materials for delivery include US20130065755, US20050123596, US20040234597, US20040109894, WO2005030174, US7722954, and US6209646.

Portland cement manufacturers have employed shrinkage-compensating cements that include an offsetting "expansive cement", which is a cement that when mixed with water forms a paste. This paste then sets to form a hardened cement. After setting, the cement increases in volume to significantly greater degree than Portland cement paste to form an expanded set cement as defined in the American Concrete Institute 223R-10 Guide for the Use of Shrinkage-Compensating Concrete (2010). Representative examples of shrinkage-compensating cement are found in US7988782, US20150107493 and US4419136.

The cement industry in general, is in need of ways to improve the preparation, handling and design of hydraulic cements with hydratable expanding agents that address these problems and shortcomings; and the oil and gas industry is in need of ways to better and more controllably delay expansion of the expanding agents, and to improve the bonding between the set cement and the casing within the well annulus.

**SUMMARY**

The invention is defined in claims 1 to 16 and is directed to expanding cement slurries for well cementing as defined in independent claim 14 and methods for preparing a cement slurry as defined in independent claim 1 and cementing a well as defined in independent claim 15. According the invention, the formulations, and methods relate to particles of an expanding agent coated with a phenolic resin.

In one aspect, embodiments are directed to a method to prepare a well cementing slurry, comprising: coating particles of an expanding agent with a phenolic resin; comprising contacting the expanding agent particles with a phenolic monomer and an aldehyde; and polymerizing the phenolic monomer and the aldehyde to form a layer of the phenolic resin coating; and combining the coated particles with water and hydraulic cement to form a cement slurry for cementing a well according to claim 1.

In another aspect, embodiments are directed to a well cementing slurry, comprising hydraulic cement, water, and particles of an expanding agent coated with a phenolic resin according to claim 14.

Further disclosed but not part of the invention is a system to cement a subterranean well, comprising a well cementing slurry comprising hydraulic cement, water, and particles of an expanding agent coated with a phenolic resin; and a pumping system to place the slurry in an annular region of the well.

In another aspect, embodiments are directed to a method to cement a subterranean well, comprising: (i) preparing a cement slurry comprising water, hydraulic cement, and particles of an expanding agent coated with a phenolic resin; (ii) placing the slurry in an annular region of the well; (iii) hardening the slurry to form an at least partially set cement; and (iv) hydrating and expanding the expanding agent to form an expanded set cement within the annular region according to claim 16.

Further disclosed but not part of the invention is a system for cementing a subterranean well in an annulus between a casing disposed within a borehole and a formation, comprising a cement slurry comprising hydraulic cement, water and capsules comprising a core comprising an expanding agent particle, and a shell comprising a phenolic resin; and a pumping system to place the cement slurry in the annulus.

## BRIEF DESCRIPTION OF THE DRAWINGS

FIG. 1A is a schematic diagram showing an essentially impermeable capsule according to embodiments of the disclosure;

FIG. 1B is a schematic diagram showing the capsule of FIG. 1A after becoming permeable according to embodiments of the disclosure;

FIG. 1C is a schematic diagram showing the capsule of FIG. 1A and or FIG. 1B after removal of shell material according to embodiments of the disclosure;

FIG. 2 shows a diagram of a well cemented according to embodiments of the disclosure;

FIG. 3 shows a diagram of an annulus between two tubular members cemented according to embodiments of the disclosure;

FIG 4 shows a capsule having a matrix island arrangement according to embodiments of the disclosure;

FIG. 5 is a graph showing a calorimetry curve for hydration of a comparative untreated expanding agent;

FIG. 6 is a graph showing a calorimetry curve for hydration of an exemplary encapsulated expanding agent according to embodiments disclosed herein; and

FIG. 7 is a graph showing the expansion of comparative and exemplary cement.

## DETAILED DESCRIPTION

The present disclosure will be described in terms of treatment of vertical wells, but is equally applicable to wells of any orientation. As used herein, "transverse" is intended to refer to a direction transverse to the axis of the well, e.g., the horizontal direction in a vertical well and vice versa. The disclosure will be described for hydrocarbon-production wells, but it is to be understood that the disclosed methods can be used for wells for the production or injection of other fluids, such as water or carbon dioxide, for example.

In this disclosure, a "tubular body" or "tubular member" may be any string of tubulars that may be run into the wellbore and at least partially cemented in place. Examples include casing, liner, solid expandable tubular, production tubing, drill pipe, and the like. For purposes of clarity and convenience, the following discussion is in reference to well casing as a non-limiting example of a tubular body or member.

As used herein, a "set cement" refers to a cement which has set (e.g., been allowed to cure, allowed to harden, and the like) for a time greater than or equal to the "initial time of setting", also referred to herein simply as the "initial set time" as determined according to ASTM C191-04a, "Time of Setting of a Hydraulic Cement by Vicat Needle", or an equivalent thereof. This same method is also used to determine the "final set time" of the cement slurry.

As used herein, a "bond" between a body within the wellbore and the set cement refers to acoustically coupled contact between the body and the cement and/or the formation of a fluid-tight seal. For purposes herein, a well casing or other tubular body is acoustically coupled to the expanded set cement when the cement is shown to exist behind the well casing by acoustic logging techniques known in the art. Accordingly, for purposes herein, a bond does not exist between a tubular body or member and a cement sheath when a micro annulus or airspace is present between the two as shown by acoustic logging techniques. Likewise, as used herein, "compression" in the annular region refers to compression in the transverse direction against or between the first tubular member and the borehole wall or second tubular member due to expansion of the cement.

As used herein, the terms "shell" and "coating" are used synonymously to mean the outermost one or group of layers covering or over a surface of a body, but need not directly contact the surface. A shell or coating which becomes water permeable at an "activation pH" comprises one or more components or features which allow for water infiltration into the core through all or part of the shell upon exposure, or following a period of delay after the exposure, of the shell to an alkaline pH above the activation pH, such as when the cement slurry has a pH substantially above the activation pH, e.g., 1 or more pH units. For purposes herein, unless stated otherwise, it is to be understood that the "pH activated shell" (i.e., a shell or coating which becomes water permeable at a particular pH above 7) is essentially impermeable to water when present in an aqueous solution having a pH substantially less than the pH needed to activate the shell, e.g., 1 or more pH units below the activation pH. It is to be further understood that for purposes herein, a pH activated shell exposed to pH conditions below the activation pH may allow a trivial amount of water infiltration.

As used herein, "essentially impermeable" means that the shell or coating, e.g., a pH activated shell or coating, is sufficiently resistant to water infiltration such that there is substantially no hydration of the encapsulated material in the particular slurry, or method and/or conditions thereof, e.g., prior to increasing the pH above the activation pH, e.g., less than 5% relative expansion of an expanding agent in a 48-hour period of exposure at the actual conditions, or less than 1 wt% liquid infiltration into the body in a 48-hour period of exposure to the particular slurry or fluid at atmospheric pressure and 25°C, based on the total weight of the coating and body. In all embodiments herein, the shell may be essentially impermeable to water at a pH of 10 or less, or a pH of 9.5 or less, or a pH of 9 or less, or a pH of 8.5 or less, or at a pH otherwise below the activation pH.

For purposes herein, it is considered that evaluating whether a particular pH is above or below the activation pH does not necessarily require knowledge of a precise or even an approximate activation pH; this determination can be made simply by observing whether or not the encapsulated expanding material hydrates and expands at the pH and or other conditions of interest, i.e., if the expanding material hydrates and expands in the alkaline aqueous medium at the test or downhole or other actual conditions, then the pH is above the activating pH; and conversely, if the shell is essentially impermeable at the test or surface or other actual conditions, then the pH is below the activating pH.

For purposes herein, a coating which becomes water permeable at a particular pH may consist of or include components or sections which are at least partially soluble in aqueous solutions having a pH above the activating pH, and/or which undergo a chemical reaction upon contact with aqueous solutions above the activating pH, and/or which decompose upon contact with aqueous solutions above the activating pH, and/or which undergo a phase transition upon contact with aqueous solutions above the activating pH. The shell thereby allows water infiltration or otherwise allows hydration of the expanding agent or other coated material in (or from) the coating. In embodiments, a water permeable shell includes a shell which surrounds a core, but which has or forms pores, voids, and/or discontinuities within the shell which allow water to pass through the shell and contact the coated material when present in an aqueous solution above the activating pH. As used herein, a water permeable shell may also include a shell which allows diffusion of water through the shell, e.g., via partial dissolution of the shell material and/or osmosis above the activating pH.

The terms capsule, encapsulated expanding agent, expanding agent capsule, and the like are used interchangeably to refer to a capsule comprising a core as a single entity disposed within a water-permeable shell or a core material dispersed throughout the shell matrix.

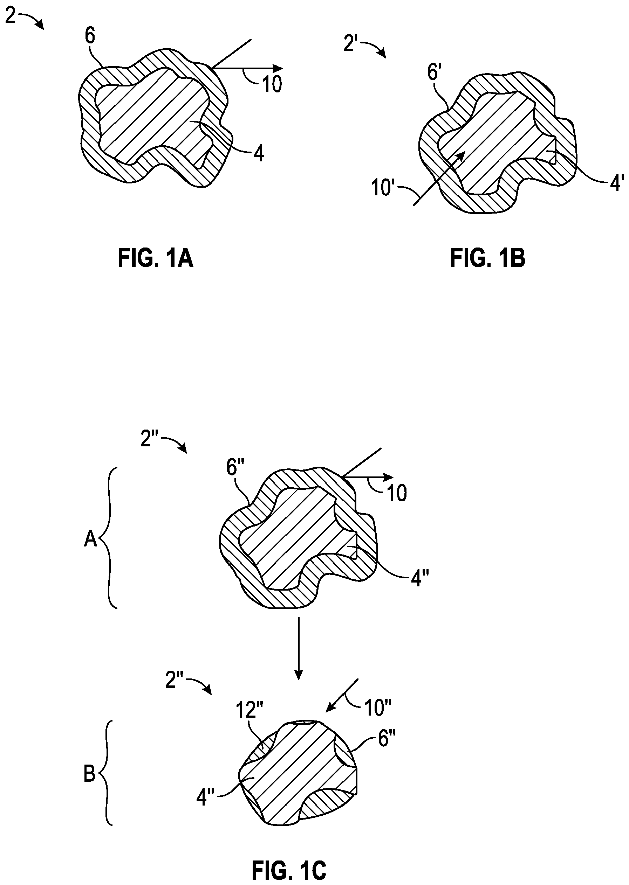

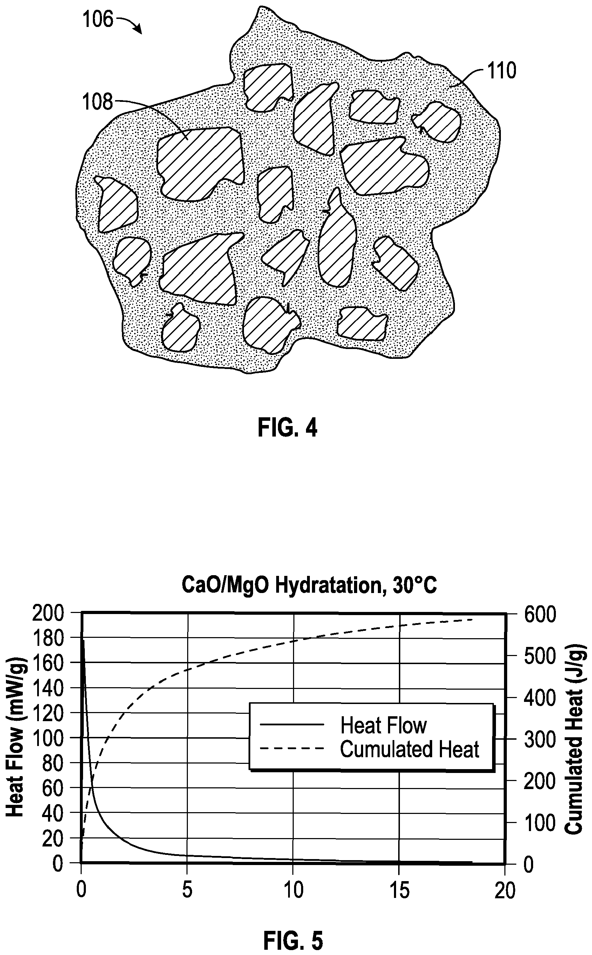

As used herein, capsules may comprise a single-core arrangement or configuration, i.e., a single core at least partially contained within a water permeable shell (cf. FIG. 1A) and/or may comprise a "matrix-island" arrangement or configuration in which a plurality of individual particles of the coated material are distributed as small islands within a matrix of the coating or shell material (cf. FIG. 4), e.g., the expanding agent is dispersed as a discontinuous phase within the continuous coating material. Unless stated otherwise, references to a capsule or coated particles include both single core-shell and matrix-island arrangements. In some embodiments, the core is homogenous. In other embodiments, the core may comprise various heterogeneous components.

As used herein for ease of reference, when a polymer is referred to as comprising a monomer, the monomer is present in the polymer in the as-polymerized form. For example, a condensation polymer made from phenol and formaldehyde may be referred to herein in a conventional manner as a phenol-formaldehyde polymer or resin, even though the as-polymerized monomers may comprise phenylene groups connected in a network via methylene and/or dimethylene ether bridging groups.

As used herein, unless specifically stated otherwise, the term "polymer" refers to a molecule comprising 2 or more "mer" units, and includes oligomers such as dimers, form. For example, a condensation polymer made from phenol and formaldehyde may be referred to herein in a conventional manner as a phenol-formaldehyde polymer or resin, even though the as-polymerized monomers may comprise phenylene groups connected in a network via methylene and/or dimethylene ether bridging groups.

As used herein, unless specifically stated otherwise, the term "polymer" refers to a molecule comprising 2 or more "mer" units, and includes oligomers such as dimers, trimers, tetramers, etc., as well as materials having a higher degree of polymerization, i.e., 20 or more. As used herein, a "polymer" may include both homopolymers and/or copolymers The term "resin" refers to a solid or highly viscous substance such as a polymer, and resins may or may not comprise prepolymers with reactive groups. A "crosslink" refers to a chemical bond between different chains in a polymer or other complex molecule.

According to the invention, an encapsulated expanding agent having utility in a cement slurry, e.g., a well cementing slurry, comprises particles of an expanding agent coated with a phenolic resin.

An expanding agent is any material, which, when added to hydraulic cement, tends to increase the volume of the set cement, e.g., a hydratable material that combines with water to form a hydrate having a larger volume relative to the hydratable material. In some embodiments, the expanding agent comprises calcium oxide, magnesium oxide, calcium sulfate hemihydrate, or a combination thereof. In some embodiments, the expanding agent comprises or consists of calcium oxide. In some embodiments, the expanding agent comprises or consists of magnesium oxide. In some embodiments, the expanding agent comprises or consists of a mixture of calcium oxide and magnesium oxide, e.g., in a weight ratio of CaO:MgO of from 1:100 to 100:1.

For purposes herein, a phenolic resin refers to phenol-formaldehyde polymers prepared by step condensation polymerization of an aromatic alcohol, referred to herein as a phenolic monomer, such as phenol, and an aldehyde, referred to herein as a hardener or a formaldehyde monomer or component, such as formaldehyde, and or other hardener, e.g., a multifunctional amine such as hexamethylenetetramine. Hardeners used to effect crosslinking, e.g., hexamethylenetetramine for curing a novolac or two-step resin, are also referred to herein as curing agents or crosslinking agents.

For purposes herein a phenolic monomer refers to phenol and substituted phenols, i.e., phenolic compounds in which one or more of the hydrogen atoms of the phenol structure is substituted with hydroxyl, halogen (e.g., F, Cl, Br, I), or hydrocarbyl of up to 10 carbon atoms, which may be aliphatic (linear or branched or alicyclic, e.g., methyl, ethyl, tert-butyl, n-pentyl, cyclohexyl), olefinic, aromatic (e.g., phenyl, benzyl), etc. or any combination of these substituents. Specific representative examples include, for example, phenol, cresol isomers, resorcinol, xylenol isomers, cardanol, and the like, or a combination thereof. In some embodiments, the phenolic monomer comprises phenol, consists essentially of phenol (e.g., >95mol% phenol), or consists of phenol. The following discussion refers to phenol by way of non-limiting example for the purposes of clarity and convenience.

For purposes herein an aldehyde refers to an organic compound having the formula R-CHO group. In some embodiments, the R group in the aldehyde may be a hydrocarbyl having from 1 (formaldehyde) or 2 carbon atoms up to 10 carbon atoms, and may be aliphatic (linear or branched or cyclic, e.g., propionic aldehyde, butylaldehyde, acetaldehyde, furfural), olefinic, aromatic (e.g., benzaldehyde), etc. For purposes herein, a hydrocarbyl is defined as a hydrocarbon radical; an aliphatic moiety is defined as a linear and/or a branched saturated hydrocarbon chain; an alicyclic moiety is defined as a cyclic hydrocarbon chain, which may further include one or more heteroatoms; an olefinic moiety is defined as a linear, branched, and/or cyclic hydrocarbon chain comprising at least one carbon-carbon double or triple bond, which may further include a heteroatom.; and an aromatic moiety refers to a moiety comprising one or more aromatic systems, including one or more heteroaromatic systems.

In some embodiments herein, the aldehyde comprises formaldehyde, consists essentially of formaldehyde (e.g., >95mol% formaldehyde), or consists of formaldehyde. Formaldehyde generally exists in several forms, e.g., monomeric formaldehyde, hydrated (methylene glycol), cyclic trimer (trioxane), polymeric formaldehyde (paraformaldehyde), and so on. The formaldehyde may be used in a solution, e.g., aqueous formaldehyde (e.g., 10-50 wt% formaldehyde), and may include methanol or another stabilizer (e.g., 0.1-10 wt%). The following discussion refers to formaldehyde by way of non-limiting example for the purposes of clarity and convenience.

In some embodiments herein, the phenolic resins may be either of two broad classes: resole (single stage) resins and novolac (two stage) resins. Resole resins are typically produced with a phenol, a molar excess of formaldehyde and an alkaline catalyst, and can be characterized by both methylene and ether bridges. The reaction may be controlled to optionally create a non-cross-linked resin that can, if desired, be cured by heat without additional catalysts to form a three dimensional cross-linked insoluble, infusible polymer.

In contrast, novolac resins are typically produced with formaldehyde, a molar excess of phenol, and an acid catalyst. The reaction produces a thermoplastic polymer characterized by methylene bridges, and can be melted but will not cross-link upon the application of heat alone. The resulting novolac thermoplastic resin can be optionally crosslinked by the addition of a novolac curing agent, such as more formaldehyde, hexamethylenetetramine, resole resin, melamine resin, or the like.

In some embodiments according to the present disclosure, particles of the expanding agent are coated with the phenolic resin, e.g., prior to combination with water and hydraulic cement to form a cement slurry, e.g., for cementing a well.

According to claim 1, a method to prepare a well cementing slurry comprises coating particles of an expanding agent with a phenolic resin; and combining the coated particles with water and hydraulic cement to form a cement slurry for cementing a well. In some embodiments, the expanding agent particles have an average particle size between 0.1 $\mu$m and 500 $\mu$m, or between 1 $\mu$m and 100 $\mu$m, and the phenolic-resin coated particles have an average particle size between 1 $\mu$m and 1000 $\mu$m, or between 10 $\mu$m and 500 $\mu$m. In some embodiments, the resin-coated particles comprise the phenolic resin in an amount of from 0.1 to 35 weight percent, or from 1 to 15 weight percent, or from 1 to 5 weight percent, based on the total weight of the particles and the coating.

According to claim 1,
the coating of the particles with the phenolic resin comprises contacting the expanding agent particles with a phenolic monomer and an aldehyde; and polymerizing the phenolic monomer and the aldehyde to form a layer of the phenolic resin coating. In embodiments, the contacting comprises spraying the phenolic monomer and aldehyde onto the particles, e.g., spray drying, fluidized bed, pan-coating, and so on. In embodiments, a suitable weight ratio of phenolic monomer to expanding agent particles is from 1:100 to 1:1, e.g., from 1:30 to 1:5. The phenolic monomer and aldehyde in various embodiments are mixed and applied together, or separately, e.g., concurrently or stepwise. The application of the phenolic monomer and/or aldehyde to the expanding agent particles in various embodiments is continuous, batch, and/or semi-batch.

In some embodiments, the phenolic monomer comprises a substituted phenol, the aldehyde has the formula R-CHO wherein R is a hydrocarbyl having from 2 to 10 carbon atoms, or a combination thereof. In some embodiments, the phenolic monomer comprises phenol. In some embodiments, the aldehyde comprises formaldehyde, methylene glycol, trioxane, paraformaldehyde, or a combination thereof. In some embodiments, the phenolic monomer comprises phenol, and the aldehyde comprises formaldehyde, methylene glycol, trioxane, paraformaldehyde, or a combination thereof.

In some embodiments, a molar ratio of the aldehyde to the phenolic monomer is less than 1, e.g., to make a novolac. In some embodiments, a molar ratio of the aldehyde to the phenolic monomer is greater than 1, e.g., to make a resole.

In some embodiments, the aldehyde, the phenolic monomer, or a combination thereof, comprises an aqueous solution, e.g., 10-50 wt% formaldehyde, and may include methanol or another stabilizer, e.g., 0.1-10 wt% methanol. In embodiments, the water from the aqueous solution may hydrate an outermost layer or surface of the expanding agent particles. In embodiments, this hydration may be negligible and/or may be reduced in extent upon further heat treatment, either during or after the coating of the particles. In some embodiments, the hydration at the surface of the expanding agent particles may affect the time of delay of the activation of the expanding agent in the cement slurry.

In some embodiments, the method may comprise crosslinking the phenolic resin in the coating. The crosslinking may occur concurrently with the coating operation as the phenolic resin is formed or applied to the particles, or may be effected in a discrete crosslinking step. In the case of a novolac, for example, the initial polymerization may produce phenolic oligomers, which can be crosslinked by the addition of a hardener, which may be, for example, formaldehyde, methylene glycol, trioxane, paraformaldehyde, hexamethylenetetramine, resole resin, melamine resin, or the like.

In some embodiments, the polymerization may occur in the presence of a catalyst, such as an acidic compound, e.g., for novolac resin, or basic compound, e.g., for resole. The polymerization and/or crosslinking, if present, may occur at a suitable temperature, e.g., between 50°C and 250°C, or between 80°C and 150°C, and can be effected with standard equipment such as a rotary calciner, conveyor belt furnace, or the like. In some embodiments, heating alone, or in the presence of a harder or curing agent, can crosslink or otherwise harden the phenolic resin and/or remove water from the expanding agent or the phenolic resin. If desired, the contacting of the particles with the phenolic monomer and/or aldehyde and or polymerization thereof, may be repeated one or more times, e.g., to increase the thickness of the phenolic coating or to improve impermeability or strength. Each subsequent contacting may in some embodiments be preceded by intermediate polymerization and/or crosslinking, or followed by subsequent polymerization and/or crosslinking.

According to the invention, the method to make a well cementing slurry comprises combining the phenolic resin-coated particles according to any embodiments herein with mix water and hydraulic cement to form a cement slurry for cementing a well. As used herein, "mix water" refers to the water that is added to the cement to make a cement slurry, and may contain various miscible or immiscible liquid and dispersed or dissolved solid additives such as fluid loss agents, antifoam agents, dispersants, antisettling agents, set retarders, or the like. In embodiments, the phenolic resin coated particles of the expanding agent may be combined with the hydraulic cement and/or mix water in any order to make the cement slurry. In embodiments, the coated expanding agent particles may be blended with the dry hydraulic cement, either offsite at a remote location or on-site as part of the cementing procedure, and then the blend then combined with mix water to make the cement slurry. In embodiments, the method comprises dry blending the phenolic resin coated particles and the hydraulic cement, and mixing the dry blend with the mix water. The dry blend can be stored indefinitely under low-humidity conditions, and prepared off-site and transported to the job location.

In some embodiments, the method comprises mixing the phenolic resin coated particles and the mix water, and blending the mixture with the hydraulic cement. In some embodiments, depending on the impermeability of the phenolic resin coating thus the ability to prevent hydration of the coated expanding material, the particle-water mixture can be prepared in advance of the blending with the hydraulic cement, e.g., prepared off-site and transported to the job location, or prepared on-site and stored for an extended period, e.g., more than an hour or more than a day or more than a week before preparing the cement slurry. In embodiments, a method to produce a cement slurry comprises combining water and phenolic resin-coated particles of an expanding agent wherein the coating becomes water permeable at a pH greater than an activating pH to form a first mixture having a pH less than the activating pH, e.g., a pH about 5-10 or 6-9. The method may optionally include adding a (minor) amount of an acid or base (i.e., less than 10 wt%) to adjust the pH. This first mixture may be subsequently combined with the hydraulic cement to produce the cement slurry according to embodiments disclosed herein.

In some embodiments, the present disclosure provides a well cementing slurry comprising hydraulic cement, water, and particles of the expanding agent coated with the phenolic resin according to any one of the embodiments disclosed herein and/or made according to the method of any one of the embodiments disclosed herein. The well cementing slurry may likewise be prepared according to the method of any one of the embodiments disclosed herein.

In some embodiments, the phenolic resin comprises a novolac resin. In some embodiments, the phenolic resin comprises a resole resin. In embodiments, the phenolic resin, e.g., the novolac resin, is crosslinked. In embodiments, the expanding agent particles within the phenolic resin coating is partially hydrated at an outer surface of the respective particles adjacent the coating.

In some embodiments, the expanding agent particles (without the coating) have an average particle size between 0.1 $\mu$m and 500 $\mu$m, or between 1 $\mu$m and 100 $\mu$m, and the phenolic-resin coated particles have an average particle size between 1 $\mu$m and 1000 $\mu$m, or between 10 $\mu$m and 500 $\mu$m. In some embodiments, the resin-coated particles comprise the phenolic resin in an amount of from 0.1 to 35 weight percent, or from 1 to 15 weight percent, or from 1 to 5 weight percent, based on the total weight of the particles and the phenolic resin coating.

In some embodiments, the cement slurry comprises the coated particles in an amount from 0.1 to 20 weight percent, or from 0.5 to 10 weight percent, or from 1 to 5 weight percent, based on the total weight of the hydraulic cement and the coated particles. In embodiments, the amount of expanding agent particles is selected to obtain the desired degree of expansion of the set cement.

In embodiments, the expanding agent is present in the cement slurry at a concentration greater than or equal to about 0.1 weight percent based on the total weight of hydraulic cement present, or greater than or equal to about 0.5 weight percent, or greater than or equal to about 1 weight percent, and less than or equal to about 25 weight percent, or less than or equal to about 20 weight percent, or less than or equal to about 15 weight percent, or less than or equal to about 10 weight percent, or less than or equal to about 5 weight percent, based on the total weight of hydraulic cement present.

In embodiments, the amount of expanding agent present in the slurry is suitable to produce from 0.1 percent to 5 percent total expansion of the cement slurry upon hardening into an expanded set cement as determined according to API 10B-5 or an equivalent thereof, e.g., from 0.2 to 3 percent total expansion, or from 0.5 to 2 percent total expansion.

In embodiments, the viscosity of the cement slurry during placement may be lower than 1000 MPa (cP) at a shear rate of 100 s$^{-1}$. In embodiments, the hydraulic cement comprises Portland cement, calcium aluminate cement, fly ash, blast furnace slag, lime, silica, magnesium oxychloride, a geopolymer, zeolite, chemically bonded phosphate ceramic, diatomaceous earth, gilsonite, hematite, ilmenite, manganese tetraoxide, barite, glass or ceramic microspheres, or combinations thereof. In some embodiments the hydraulic cement consists essentially of Portland cement.

According to claim 15 the invention refers to a method to cement a subterranean well having a borehole disposed through a formation, comprises: (i) preparing a cement slurry comprising water, hydraulic cement and phenolic resin coated particles of an expanding agent, according to one or more embodiments disclosed herein; (ii) placing the slurry in an annular region of the well, e.g., between a first tubular body and a borehole wall, or between the first tubular body and a second tubular body; (iii) hardening the slurry to form an at least partially set cement; and (iv) infiltrating a portion of the water into the expanding agent to hydrate and expand the expanding agent to form an expanded set cement within the annular region.

In some embodiments herein, the well cementing slurry exhibits less than 50% relative expansion, based on a total percent expansion of the expanded set cement determined according to API-10B-5, prior to an initial set time for the cement slurry, determined according to ASTM C191-04a, and greater than 50% relative expansion after the initial set time for the cement slurry. For purposes herein, the percent expansion produced by setting or hardening of the cement slurry into the expanded set cement is determined according to API-10B-5 or an equivalent thereof. In this method, a ring shaped mold sealed on the top and bottom is filled to form a circular ring of cement. The mold has a stationary inner ring surrounded by an expandable outer ring which increases in circumference as the cement slurry inside the mold sets and expands. The test may be conducted at various temperatures and pressures. The percent expansion is determined by first measuring the distance M (mm) between two points on the outer ring at the time of filling the mold with the cement $T_0$ (e.g., measure $M_0$(mm) @ $T_0$), and then again measuring the distance between these same two points after the cement has set to form the expanded set cement. This measurement is determined at the final time $T_f$, as specified in the method (e.g., $M_f$(mm) @ $T_f$). The total percent expansion is then determined by multiplying the difference between the final distance and the initial distance by a constant associated with the particular mold, according to the following formula:

$$\text{Percent expansion} = (M_f - M_0) * \text{mold constant.}$$

For purposes herein, this percent expansion obtained at the final time $T_f$ is referred to as the total percent expansion of the cement. This total percent expansion of the cement serves as the basis for all relative percent expansion determinations, as discussed herein. For purposes herein, the relative expansion of the cement slurry at a particular time ($T_1$), referred to as the percent relative expansion is equal to the percent expansion of the slurry (or setting cement) measured at a time $T_1$ divided by the total percent expansion achieved by the expanded set cement at $T_f$ determined according to API-10B-5. For purposes herein, the percent relative expansion may be determined at standard conditions of 25°C and 1 atmosphere of pressure. As an example, if a percent expansion at time $T_1$ is determined according to API-10B-5 to be 0.1%, and the total percent expansion at time $T_f$ is determined according to the same method under the same conditions to be 1%, the percent relative expansion of the cement slurry at time $T_1$ would be:

$$0.1\%/1\% *100\% = 10\% \text{ relative expansion at } T_1$$

Since the cement slurry being placed within the annulus of the wellbore is readily flowable, any expansion which occurs before the cement begins to set may increase the volume of the cement slurry, and is not thought to contribute to expansion within the annulus which produces a cement sheath transversely compressed therein. Accordingly, in embodiments, at least a percentage of the hydration of the expanding agent is delayed until after the initial set time of the cement, thereby delaying the expansion of the cement to a time after the slurry becomes more resistant to flow. This allows placement of the cement slurry within the annulus and at least partial setting of the cement prior to expansion of the cement.

In embodiments, the delay in expansion of the cement slurry is determined relative to the initial set time, the final set time, or a combination thereof for the cement slurry. The initial set time and the final set time are determined according to ASTM C191-04a, or an equivalent thereof. The initial set time and/or the final set time may be determined at standard temperatures and pressures, or at the temperature and pressure specified in ASTM C191-04a. The relative expansion properties of the cement slurry at various times, or within various time intervals, are determined relative to the total amount of expansion (the total percent expansion) obtained by the cement slurry, utilizing the percent expansion determined according to AP1-10B-5.

For purposes of the claims and embodiments herein, the percent relative expansion may be determined at standard conditions of 30°C and 1 atmosphere of pressure, unless otherwise stated. In embodiments, to evaluate the suitability of a proposed cement formulation for a particular cementing job, the percent relative expansion is determined at an appropriate pressure and temperature, e.g., a downhole pressure and temperature expected to be encountered during the cementing job, or if there is a range of temperatures, the highest temperature expected for the cement that is within the limits of the testing apparatus, e.g., if the testing apparatus has a maximum testing temperature of 100°C, the testing temperature is the lesser of the maximum temperature of the annular region or 100°C. In embodiments, when it is determined that the proposed cement slurry formulation is suitable for the job, the cement slurry for the well cementing job is prepared in accordance with the formulation meeting the expansion characteristics.

In embodiments, the composition of the coating comprises a phenolic resin, e.g., a resole or novolac resin, either of which may be crosslinked. In some embodiments, the phenolic resin comprises a novolac resin, or a crosslinked novolac resin.

In embodiments, the composition and/or arrangement of the shell is selected to delay hydration of the expanding agent until a time after the shell is combined with the hydraulic cement. The addition of a hydraulic cement to an aqueous medium results in a substantial increase in the pH of the solution, typically from around neutral pH (e.g., 6.5 to 8.5) up to a pH in excess of 10 or 11 or more. In some embodiments, this increase in pH results in the phenolic resin coating becoming (substantially more) water permeable and eventually allows water to infiltrate into the expanding agent to hydrate and thereby expand the expanding agent.

In embodiments the phenolic resin coating is selected to delay hydration of the expanding agent after being combined in the cement slurry for a time such that prior to an initial set time for the cement slurry, determined according to ASTM C191-04a, or an equivalent thereof, the percent relative expansion of the cement slurry, if any, is less than 50%, based on the total percent expansion of the expanded set cement determined according to API-10B-5.

In embodiments, the phenolic resin coating is selected to delay hydration of the expanding agent after being combined in the cement slurry for a time such that prior to an initial set time for the cement slurry, determined according to ASTM C191-04a, or an equivalent thereof, the percent relative expansion of the cement slurry that occurs, if any, is less than 50% (or less than 40%, or less than 30%, or less than 20%, or less than 10%), based on the total percent expansion of the expanded set cement determined according to API-10B-5; and after the initial set time for the cement slurry, the percent relative expansion of the cement slurry that occurs is greater than 50% (or greater than 60%, or greater than 70%, or greater than 80%, or greater than 90%), based on the total percent expansion of the expanded set cement determined according to API-10B-5. to a temperature change, a pressure change, a mechanical disturbance resulting from a well intervention, or a combination thereof.

In embodiments, the phenolic resin coating is essentially impermeable to water at a pH below the target or activating pH, and allows at least 10 times greater water infiltration, or 20 times, or 30 times, or 40 times, or 50 times, or 60 times, or 70 times, or 80 times, or 90 times, or essentially fails to inhibit water infiltration above the activating pH.

In embodiments, the phenolic resin coating becomes water permeable at a pH greater than about 10, or a pH greater than about 10.5, or a pH greater than about 11, or a pH greater than about 11.5, or a pH equal to or greater than about 12. In embodiments, the phenolic resin coating is essentially impermeable to water at the pH of the mix water used to produce the cement, and becomes water permeable at the pH of the cement formulation after a period of delay, i.e., the phenolic resin coating eventually becomes water permeable when combined with the hydraulic cement and water.

In embodiments, the bond between the first tubular body and the expanded set cement is maintained after fluctuating the dimensions of the first tubular body in response to a temperature change, a pressure change, a mechanical disturbance resulting from a well intervention, or a combination thereof. In embodiments, the bond between the borehole wall and the expanded set cement or the bond between the second tubular body and the expanded set cement is maintained after fluctuating the dimensions of the first tubular body in response to the temperature change, the pressure change, the mechanical disturbance resulting from the well intervention, or combinations thereof.

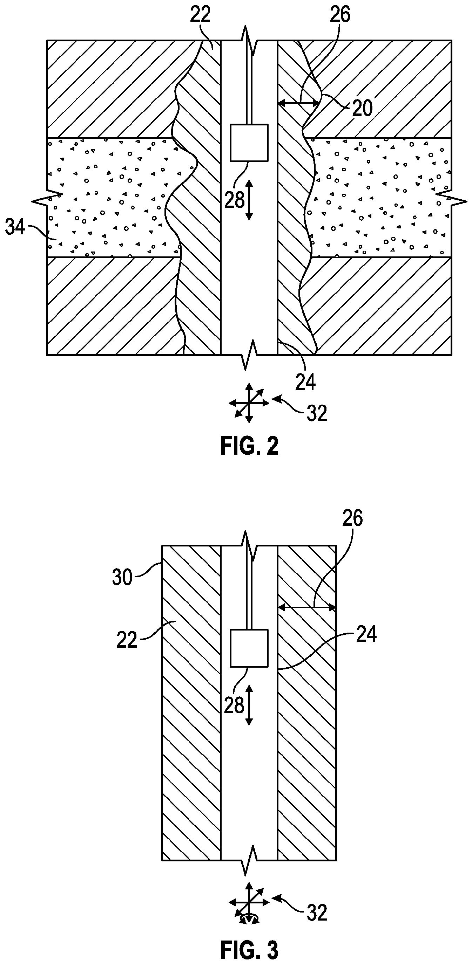

According to the invention, the cement slurry is prepared, comprising water, hydraulic cement and phenolic resin-coated particles of an expanding agent, which are surrounded by (e.g., encapsulated within) a pH activatable phenolic resin shell (see FIG. 1A). The slurry is then placed in an annular region between a first tubular body (e.g., the well casing) and a borehole wall or a second tubular body (see FIGs. 2 and 3). The slurry is then allowed to at least partially set, also referred to in the art as "harden", i.e., allowed to set for a time greater than or equal to the first or initial set time measured for the cement slurry when determined according to ASTM C191-04a, or an equivalent thereof. Addition of the hydraulic cement to water first tubular body in response to the temperature change, the pressure change, the mechanical disturbance resulting from the well intervention, or combinations thereof.

Disclosed, but outside the scope of the invention is a cement slurry which is prepared comprising water, hydraulic cement and phenolic resin-coated particles of an expanding agent, which are at least partially surrounded by (e.g., encapsulated within) a pH activatable phenolic resin shell (see FIG. 1A). The slurry is then placed in an annular region between a first tubular body (e.g., the well casing) and a borehole wall or a second tubular body (see FIGs. 2 and 3). The slurry is then allowed to at least partially set, also referred to in the art as "harden", i.e., allowed to set for a time greater than or equal to the first or initial set time measured for the cement slurry when determined according to ASTM C191-04a, or an equivalent thereof. Addition of the hydraulic cement to water results in a mixture having a pH above the activating pH, e.g., a pH of 10-12 or more. At this elevated pH, in some embodiments, the phenolic resin decomposes at a much faster rate than when the phenolic resin is at conditions of a pH below the activating pH, e.g., a pH of below 10, or below 9, or below 8. Decomposition or other effects of the high pH on the phenolic resin coating can result in the infiltration of a portion of the water present in the slurry into the expanding agent particles. As the water contacts the expanding agent, the expanding agent hydrates, causing the expanding agent to expand. Accordingly, the expanding agent is activated at the pH of the cement slurry. In embodiments, this expansion may cause the remaining portion of the coating to rupture, thus releasing or further reducing the inhibition of the water contacting the expanding agent, or otherwise further accelerating hydration and expansion of the expanding agent.

Expansion of the expanding agent within the partially set cement forms an expanded set cement within the annular region of the wellbore. In embodiments, the amount of expansion of the cement is sufficient to form an expanded set cement radially pre-stressed within the cement sheath, i.e., the expanded set cement is transversely compressed between the first tubular body and the borehole wall, or the first tubular body and the second tubular body.

In some embodiments, the amount of expanding agent present in the cement slurry is sufficient to produce an expanded set cement in a state of compression within the annular region which facilitates maintenance of a bond with the first tubular member and the borehole wall or second tubular member.

The method may further comprise fluctuating the dimensions of the first tubular body, e.g., allowing the dimensions of the tubular body to fluctuate in response to a temperature change, a pressure change, or a mechanical disturbance resulting from a well intervention or a combination thereof. Sonic logging is a common technique to determine the presence and quality of the cement sheath in the annulus between the well casing and the next barrier. The method may also further comprise transversely compressing the set cement between the first tubular body and the borehole wall or second tubular body to maintain bonding therewith, e.g., allowing the set cement to expand and/or to maintain the state of compression, during and/or after the dimensional fluctuation of the first tubular body.

Further disclosed are methods for maintaining zonal isolation in a wellbore. A cement slurry is prepared that comprises water, hydraulic cement and phenolic resin coated particles of an expanding agent, wherein the phenolic resin decomposes at a pH greater than 10. The slurry is then placed in an annular region between a first tubular body and a borehole wall or a second tubular body. The slurry is hardened, e.g., allowed to harden, to form an at least partially set cement. Water is infiltrated, e.g., allowed to infiltrate, into the particles to hydrate the expanding agent. The set cement is expanded to compress against and bond with the borehole wall to isolate a zone of the formation adjacent the expanded cement. The compression and bond are maintained adjacent the isolated zone after dimensions of the first tubular body are fluctuated, e.g., allowed to fluctuate in response to a temperature change, a pressure change, or a mechanical disturbance resulting from a well intervention or a combination thereof. In embodiments an acoustic logging tool is introduced into the tubular body. The tool measures acoustic impedance, amplitude, attenuation or a bond index or a combination thereof. In some embodiments, the measurements are taken azimuthally, longitudinally or both along the tubular body.

For all aspects, the expansion of the expanding agent, and thus the expansion of the cement, may be delayed for a particular period of time after initial contact of the phenolic resin coated particles containing the expanding agent (e.g., the encapsulated expanding agent) with water. In embodiments, the resin coated particles are "activated" to allow infiltration of water by the subjecting the resin coated particles to a pH greater than 10.

Further disclosed, but outside the scope of the invention is a method to produce a cement slurry, comprises combining water and capsules comprising phenolic resin coated particles of an expanding agent surrounded by a shell comprising a polymer which decomposes at a pH greater than an activating pH, optionally adding an amount of an acid or a base, to form a first mixture having a pH from about 5 to 10 or about 6 to 9; and combining the first mixture with a hydraulic cement to produce the cement slurry having a pH greater than the activating pH, e.g., greater than 10 or greater than 12, to allow infiltration of a portion of the water into the resin coated particles hydrating the expanding agent thereby expanding the expanding agent to form an expanded set cement. In embodiments, the first mixture may be prepared at least a day before, at least a week before, or at least two weeks before preparing the cement slurry. In embodiments, the first mixture may be prepared off-site, and then transported to the wellsite where it is mixed with the hydraulic cement to form the cement slurry.

In embodiments, the ability to activate the resin coated particles via pH further provides for a more robust expanding agent, which may be premixed or shipped and stored without hydration of the expanding agent until the capsules are combined with the cement in cement slurry. Accordingly, more of the expanding agent is available down hole even after improper storage or transport in wet conditions that sometimes occur in wellsite environments.

In some embodiments, the composition and/or configuration of the pH activated phenolic resin may be selected to delay the time between contacting the cement composition with water (i.e., preparing a cement slurry comprising water, hydraulic cement and capsules comprising resin coated particles of an expanding agent surrounded by a coating which becomes water permeable at the pH of the cement slurry, or when otherwise exposed to a pH greater than an activating pH, e.g., above about 8, or above 9 or above 10 or above 11) and expansion of the set cement brought about by hydration and subsequent expansion of the expanding agent (e.g., infiltration of water into the capsule and/or rupture of the shell to hydrate and expand the expanding agent).

In embodiments, the decomposition rate of the outer layer or layers of the pH activated coating may be selected by selecting a coating composition having kinetics suitable to decompose upon contact with the water at a pH of greater than 8, or greater than 9, or greater than 10 under down hole conditions, over a suitable period of time; and/or selecting a phenolic coating composition which chemically reacts e.g., via hydrolysis with the water at the pH of the cement slurry (e.g., greater than 8, or 9, or 10, or 11) to weaken the strength of the shell and/or the solubility of the shell in a controlled manner over a suitable period of time; and/or the thickness of the shell may be selected to prevent water at the pH of the cement slurry from contacting the expanding agent for a suitable period of time.

For example, a thicker shell layer may increase the strength or toughness of the coated particles to resist rupture, as well as reduce hydraulic conductance, water infiltration, or the like. Likewise, the composition of the phenolic resin present in the shell may be selected to have a slower hydrolysis rate to further delay water infiltration into the capsule. In other examples, a combination of coating layers having different properties may be selected to delay water infiltration into the capsule, e.g., causing a longer time to dissolve, thereby delaying hydration and subsequent expansion of the expanding agent until the cement slurry is properly placed within the annulus of the well bore and has begun to set i.e., allowed to set for a time greater than or equal to the first or initial set time measured for the cement slurry when determined according to ASTM C191-04a, or an equivalent thereof.

In the figures, like numerals are used to designate like parts. As shown in FIG. 1A, the capsule 2 comprises a core 4, comprising a particle an expanding agent, which is surrounded by a phenolic resin coating 6. Initially, the water is excluded by the impermeable coating 6, as shown by arrow 10.

As shown in FIG. 1B, after activation, e.g., by exposure to the pH conditions prevailing in the cement slurry, the capsule 2' comprises a core 4', comprising the particle of the expanding agent, which is surrounded by a phenolic resin shell 6', which has become water permeable, e.g., by at least partial dissolution, hydrolysis, decomposition, or other means of degradation of one or more components of the shell 6'. When the material of the shell 6' becomes permeable, water infiltrates as shown by arrow 10' through the activated shell 6', even though in some embodiments the shell 6' may physically remain generally intact. When the water reaches the core 4', the expanding material begins hydrating and expansion is initiated.

As shown in FIG. 1C, in an initial "A" stage, the capsule 2" comprises a core 4", comprising an expanding agent, which is surrounded by a shell 6", in particle of the expanding agent, which is at least partially surrounded by a phenolic resin shell 6', which has become water permeable, e.g., by at least partial dissolution, hydrolysis, decomposition, or other means of degradation of one or more components of the shell 6'. When the material of the shell 6' becomes permeable, water infiltrates as shown by arrow 10' through the activated shell 6', even though in some embodiments the shell 6' may physically remain generally intact. When the water reaches the core 4', the expanding material begins hydrating and expansion is initiated.

As shown in FIG. 1C, in an initial "A" stage, the capsule 2" comprises a core 4", comprising an expanding agent, which is at least partially surrounded by a shell 6", in a manner similar to FIGs. 1A and 1B. Initially, the water is excluded by the impermeable shell 6", as shown by arrow 10. After activation in a later stage "B", e.g., by exposure to the pH conditions prevailing in the cement slurry, the capsule 2" comprises a core 4", comprising the expanding agent particle, which is directly exposed to water permeation 10" through surface(s) 12", which may comprise holes or exposed areas between any remaining shell portions 6" following removal, e.g., by at least partial dissolution, hydrolysis, decomposition, or other means of degradation of one or more components of the shell 6". When the water reaches the core 4", the expanding material begins hydrating and expansion is initiated. In the "B" stage, the core 4" is expanded and the expansion may further tear and/or rupture the shell 6", and/or otherwise enlarge the openings exposing the surfaces 12", to accelerate further water infiltration 10", hydration, and expansion of the core 4".

With reference to some embodiments, borehole 20 and tubular member 30 are shown in FIGs. 2 and 3, respectively, wherein like numerals are used to designate like parts. The cement slurry comprising the resin coated particles according to any embodiments disclosed herein is placed in the annulus 22 around the casing or other tubular member 24, set (initial and or final) in place, and with hydration of the expanding agent, expanded as indicated at 26 to induce a state of compression and facilitate bonding. The annulus 22 is shown between the tubular member 24 and the borehole wall 20 (FIG. 2) or the tubular member 30 (FIG. 3). The logging tool 28 is then introduced to take measurements as described in some embodiments herein, for example, to map impedance and determine the presence of cement in the annulus 22 behind the tubular 22 can instead and/or also occur during and/or after the dimensional change 32, and according to some embodiments of the disclosure, the state of compression of the cement can be induced in the annulus 22 during and/or after the dimensional change 32.

With reference to FIG. 2, in some embodiments a zone 34 is isolated by placement, setting (initial and or final), and expansion 26 of the cement in the annulus 22. The compression and bonding can be maintained during dimensional change 32, e.g., so that the zone 34 remains in isolation and does not fluidly communicate via the annulus 22 with other zones in the formation.

As shown in FIGs. 2 and 3, in embodiments the cement slurry comprises an amount of expanding agent sufficient to form the expanded set cement transversely compressed between (due to expansion 26) and bonded to, the first tubular member (tubular body) 24 and the borehole wall, or the first tubular member (tubular body) 24 and the second tubular member (tubular body) 30.

As shown in FIG. 2, in embodiments, the bonds between the first tubular body 24 and the expanded set cement, and between the borehole wall and the expanded set cement are each sufficient to be acoustically coupled and/or to isolate a zone 34 of the formation adjacent the expanded set cement, e.g., from another zone. In some embodiments, the compression 26 and bonding can be maintained during dimensional change 32, e.g., so that the zone 34 remains in isolation and does not fluidly communicate via the annulus 22 with other zones.

In some embodiments, as shown in FIG. 1A, the capsules 2 comprise or consist essentially of a single-core configuration, in which the expanding agent particle(s) is arranged as a single core 4 surrounded by the initially impermeable shell 6, which is activated by a pH change for permeation and entry of water into the core, as illustrated in FIGs. 1B and 1C. In some embodiments, as shown in FIG. 4, the resin coated particles 106 may comprise or consist essentially of capsules having a "matrix-island" configuration in which particles of the expanding agent 108 are dispersed as a discontinuous phase within the continuous material of the resin coating 110. In some embodiments, the resin coated particles may comprise a mixture of one or more types of the single-core capsules (FIGs. 1A, 1B, 1C) and/or one or more types of the "matrix-island" configuration (FIG. 4), and/or the capsules may be a "hybrid" of large-core

In some embodiments, as shown in FIG. 1A, the capsules 2 comprise or consist essentially of a single-core configuration, in which the expanding agent particle(s) is arranged as a single core 4 at least partially surrounded by the initially impermeable shell 6, which is activated by a pH change for permeation and entry of water into the core, as illustrated in FIGs. 1B and 1C. In some embodiments, as shown in FIG. 4, the resin coated particles 106 may comprise or consist essentially of capsules having a "matrix-island" configuration in which particles of the expanding agent 108 are dispersed as a discontinuous phase within the continuous material of the resin coating 110. In some embodiments, the resin coated particles may comprise a mixture of one or more types of the single-core capsules (FIGs. 1A, 1B, 1C) and/or one or more types of the "matrix-island" configuration (FIG. 4), and/or the capsules may be a "hybrid" of large-core expanding material particles as well as smaller dispersed expanding material particles within the same shell (not shown).

In some embodiments, core-shell type particles can release or expose the encapsulated expanding agent, e.g., all at once, if the shell is ruptured, which can occur mechanically and/or by chemical degradation. As used herein, "rupture" refers to any loss of integrity of the shell whether by tearing, bursting, and so forth. Matrix-island type cores can release the islands of expanding agent upon chemical degradation and/or solubility of the matrix.

Utilizing this test, the attributes of the shell may be determined to meet requirements of a particular cementing operation.

## EXAMPLES

The following examples are provided to more fully illustrate the disclosure. These examples are not intended to limit the scope of the disclosure in any way.

*Hydration of non-encapsulated and encapsulated CaO/MgO in water:* To determine the delay provided by the outer layer, the hydration heat of the material was measured over time after contacting the capsules with water. The heat released upon hydration results from the following reactions:

$$CaO + H_2O \rightarrow Ca(OH)_2, 1150 \text{ J/g} \qquad (I)$$

$$MgO + H_2O \rightarrow Mg(OH)_2, 930 \text{ J/g} \qquad (II)$$

As shown in FIG. 5, in comparative Example 1, when a comparative untreated, non-encapsulated expanding agent is contacted with water, at lower temperatures, i.e., below 60°C, the heat is mainly provided by reaction (I) during the first hours and a plateau is reached within 15-20 hours.

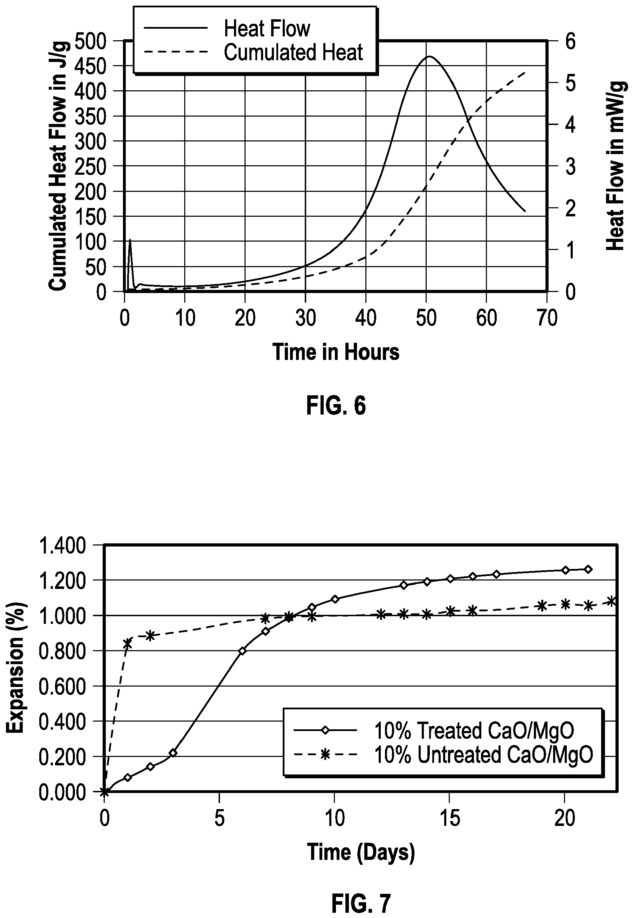

Exemplary capsules of the CaO/MgO treated with 8 wt% of a phenolic resin, based on the weight of the CaO/MgO, were then evaluated. As shown in FIG. 6, contacting the capsules prepared according to Example 2 results in a much slower hydration, with a plateau being reached after more than 70 hours.

*Cement slurries with non-encapsulated and encapsulated CaO/MgO:* Cement slurries A and B were formulated for expansion testing according to API testing via linear expansion cells using API 10B-5, or ISO 10426-5, as described above. Cement slurry A utilized the untreated CaO/MgO evaluated in Comparative Example 1, and Example 4 employed the capsules evaluated in Example 2. The cement slurries were prepared as described in Table 1 and subjected to testing as described above and/or according to API 10B-5.

**Table 1: Cement slurries for showing effect of expanding agent encapsulation**

| Component | Example 3 - Slurry A Untreated CaO/MgO | Example 4 - Slurry B Resin-Treated CaO/MgO |
|---|---|---|
| Class G cement (mass by weight of cement) | 745 g | 743 g |
| Untreated (dry) CaO/MgO | 75 g | - |
| Resin-treated CaO/MgO | - | 80 g |
| Fluid loss | 0 g | 2.2 g |
| Antifoam | 3.2 g | 3.0 g |
| Dispersant | 4.8 g | 4.4 g |
| Anti-settling | 1.5 g | 1.5 g |
| Retarder | 0 g | - |
| Water | 335 g | 332 g |

As shown in FIG. 7, the comparative untreated expanding agent (Slurry A) achieved an expansion plateau after 2 days. In contrast, the exemplary phenolic resin-encapsulated expanding agent (Slurry B) showed expansion which increased at a much slower rate, with a delay or induction period of 4 days during which very little expansion occurred. Then a plateau was reached after about 15 days, that was higher than that of the slurry with the untreated expanding agent.

Although only a few example embodiments have been described in detail above, those skilled in the art will readily appreciate that many modifications are possible in the example embodiments within the scope of the invention defined in claims 1 and 14. Accordingly, all such modifications are intended to be included within the scope of this disclosure as defined in the following claims.

**Claims**

1. A method to prepare a well cementing slurry, comprising:

   coating particles of an expanding agent with a phenolic resin; comprising:

   contacting the expanding agent particles with a phenolic monomer and an aldehyde; and
   polymerizing the phenolic monomer and the aldehyde to form a layer of the phenolic resin coating; and

   combining the coated particles with mix water and hydraulic cement to form a cement slurry for cementing a well.

2. The method according to claim 1, wherein the expanding agent particles have an average particle size between 0.1 $\mu$m and 500 $\mu$m, and the coated particles have an average particle size between 1 $\mu$m and 1000 $\mu$m.

3. The method according to claim 1, wherein the phenolic monomer comprises phenol, and the aldehyde comprises formaldehyde, methylene glycol, trioxane, paraformaldehyde, or a combination thereof.

4. The method according to claim 1, wherein the phenolic monomer comprises a substituted phenol, the aldehyde has the formula R-CHO wherein R is a hydrocarbyl having from 2 to 10 carbon atoms, or a combination thereof.

5. The method according to any one of claims 1 and 3 to 4, wherein a molar ratio of the aldehyde to the phenolic monomer is less than 1.

6. The method according to any one of claims 1 and 3 to 5, wherein the aldehyde, the phenolic monomer, or a combination thereof, comprises an aqueous solution.

7. The method according to any one of claims 1 and 3 to 6, further comprises crosslinking the phenolic resin in the coating.

8. The method according to any one of claims 1 and 3 to 7, comprising spraying the phenolic monomer and the aldehyde on the particles.

9. The method according to any one of claims 1 and 3 to 8, wherein the polymerization and/or crosslinking (if present) are at a temperature between 50°C and 250°C.

10. The method according to any one of claims 1 and 3 to 9, further comprising repeating the contacting and polymerizing one or a plurality of times to form a plurality of the layers.

11. The method according to any one of claims 1 to 10, further comprising mixing the phenolic resin coated particles and the mix water, and blending the mixture with the hydraulic cement.

12. The method according to any one of claims 1 to 10, further comprising dry blending the phenolic resin coated particles and the hydraulic cement, and mixing the dry blend with the mix water.

13. The method according to any one of claims 1 to 12, wherein the expanding agent comprises calcium oxide, magnesium oxide, calcium sulfate hemihydrate, or a combination thereof.

14. A well cementing slurry, comprising hydraulic cement, water, and particles of an expanding agent coated with a phenolic resin.

15. A method to cement a subterranean well, comprising:

   (i) preparing the well cementing slurry according to claim 14;
   (ii) placing the slurry in an annular region of the well around a tubular member;
   (iii) hardening the slurry to form an at least partially set cement; and
   (iv) hydrating the expanding agent to form an expanded set cement within the annular region.

16. The method according to claim 15, comprising:

a. preparing a proposed cement slurry formulation comprising the water, cement, and particles of an expanding agent coated with a phenolic resin;

and further comprising

b. determining that the proposed cement slurry formulation exhibits expansion characteristics of less than 50% relative expansion, based on a total percent expansion of the expanded set cement determined according to API-10B-5, prior to an initial set time for the proposed slurry formulation, determined according to ASTM C 191-04aC, and greater than 50% relative expansion after the initial set time for the proposed slurry formulation, wherein the initial set time, final set time, and relative expansion are determined at a maximum downhole pressure and temperature in the annular region up to 100°C, or at 100°C if the maximum temperature of the annular region is greater than 100°C; and

c. preparing the cement slurry in (i) for the placing (ii), hardening (iii), and hydrating (iv), in accordance with the proposed cement slurry formulation exhibiting the characteristics as determined in (b).

**Patentansprüche**

1. Verfahren zum Herstellen einer Bohrlochzementierungsschlämme, umfassend:
   Beschichten von Partikeln eines Quellmittels mit einem Phenolharz; umfassend:

   Inkontaktbringen der Quellmittelpartikel mit einem Phenolmonomer und einem Aldehyd; und
   Polymerisieren des Phenolmonomers und des Aldehyds, um eine Schicht der Phenolharzbeschichtung auszubilden; und
   Kombinieren der beschichteten Partikel mit Mischwasser und Hydraulikzement, um eine Zementschlämme zum Zementieren eines Bohrlochs auszubilden.

2. Verfahren gemäß Anspruch 1, wobei die Quellmittelpartikel eine durchschnittliche Partikelgröße zwischen 0,1 $\mu$m und 500 $\mu$m aufweisen, und die beschichteten Partikel eine durchschnittliche Partikelgröße zwischen 1 $\mu$m und 1000 $\mu$m aufweisen.

3. Verfahren gemäß Anspruch 1, wobei das Phenolmonomer Phenol umfasst, und das Aldehyd Formaldehyd, Methylenglykol, Trioxan, Paraformaldehyd oder eine Kombination davon umfasst.

4. Verfahren gemäß Anspruch 1, wobei das Phenolmonomer ein substituiertes Phenol umfasst, das Aldehyd die Formel R-CHO aufweist, wobei R ein Hydrocarbyl mit 2 bis 10 Kohlenstoffatomen oder eine Kombination davon ist.

5. Verfahren gemäß einem der Ansprüche 1 und 3 bis 4, wobei ein Molverhältnis des Aldehyds zum Phenolmonomer kleiner als 1 ist.

6. Verfahren gemäß einem der Ansprüche 1 und 3 bis 5, wobei das Aldehyd, das Phenolmonomer oder eine Kombination davon eine wässrige Lösung umfasst.

7. Verfahren gemäß einem der Ansprüche 1 und 3 bis 6, ferner umfassend ein Vernetzen des Phenolharzes in der Beschichtung.

8. Verfahren gemäß einem der Ansprüche 1 und 3 bis 7, umfassend ein Aufsprühen des Phenolmonomers und des Aldehyds auf die Partikel.

9. Verfahren gemäß einem der Ansprüche 1 und 3 bis 8, wobei die Polymerisation und/oder Vernetzung (falls gegeben) bei einer Temperatur zwischen 50 °C und 250 °C stattfinden.

10. Verfahren gemäß einem der Ansprüche 1 und 3 bis 9, ferner umfassend ein einmaliges oder mehrmaliges Wiederholen des Inkontaktbringens und Polymerisierens, um mehrere der Schichten auszubilden.

11. Verfahren gemäß einem der Ansprüche 1 bis 10, ferner umfassend ein Mischen der phenolharzbeschichteten Partikel und des Mischwassers, und Vermischen der Mischung mit dem Hydraulikzement.

12. Verfahren gemäß einem der Ansprüche 1 bis 10, ferner umfassend ein trockenes Vermischen der phenolharzbeschichteten Partikel und des Hydraulikzements, und Mischen der Trockenmischung mit dem Mischwasser.

**13.** Verfahren gemäß einem der Ansprüche 1 bis 12, wobei das Quellmittel Calciumoxid, Magnesiumoxid, Calciumsulfat-Halbhydrat oder eine Kombination davon umfasst.

**14.** Bohrlochzementierungsschlämme, umfassend Hydraulikzement, Wasser und Partikel eines mit einem Phenolharz beschichteten Quellmittels.

**15.** Verfahren zum Zementieren eines unterirdischen Bohrlochs, umfassend:

(i) Zubereiten der Bohrlochzementierungsschlämme gemäß Anspruch 14;
(ii) Platzieren der Schlämme in einen ringförmigen Bereich des Bohrlochs um ein Rohrelement;
(iii) Aushärten der Schlämme, um einen wenigstens teilweise abgebundenen Zement auszubilden; und
(iv) Hydratisieren des Quellmittels, um einen gequollenen abgebundenen Zement innerhalb des ringförmigen Bereichs auszubilden.

**16.** Verfahren gemäß Anspruch 15, umfassend:

a. Zubereiten einer vorgeschlagenen Zementschlämmenzubereitung, umfassend das Wasser, den Zement und die Partikel eines mit einem Phenolharz beschichteten Quellmittels;
und ferner umfassend

b. Bestimmen, dass die vorgeschlagene Zementschlämmenzubereitung Quellcharakteristiken von kleiner als 50 % relative Quellung basierend auf einem nach API-10B-5 bestimmten Gesamtprozentsatz an Quellung des gequollenen abgebundenen Zements vor einer nach ASTM C 191-04aC bestimmten Zeitdauer bis zum Abbindebeginn für die vorgeschlagene Zementschlämmenzubereitung und größer als 50 % relative Quellung nach der Zeitdauer bis zum Abbindebeginn für die vorgeschlagene Schlämmenzubereitung aufweist, wobei die Zeitdauer bis zum Abbindebeginn, die Abbindezeit und die relative Quellung bei einem maximalen Bohrlochdruck und einer Temperatur im ringförmigen Bereich bis zu 100 °C oder bei 100 °C, falls die maximale Temperatur im ringförmigen Bereich mehr als 100 °C beträgt, bestimmt werden; und

c. Zubereiten der Zementschlämme in (i) zum Platzieren (ii), Aushärten (iii) und Hydratasieren (iv) gemäß der die in (b) bestimmten Charakteristiken aufweisenden vorgeschlagenen Zementschlämme.

**Revendications**

**1.** Procédé de préparation d'un laitier de cimentation de puits, comprenant :

l'enrobage des particules d'un agent d'expansion avec une résine phénolique ; comprenant :

La mise en contact des particules d'agent d'expansion avec un monomère phénolique et un aldéhyde ; et la polymérisation du monomère phénolique et de l'aldéhyde pour former une couche d'enrobage de la résine phénolique ; et

la combinaison des particules enrobées avec l'eau de mixage et le ciment hydraulique pour former un laitier de ciment destiné à cimenter un puits.

**2.** Procédé selon la revendication 1, dans lequel les particules d'agent d'expansion présentent une taille de particule moyenne entre 0,1 $\mu$m et 500 $\mu$m et les particules enrobées présentent une taille de particule moyenne entre 1 $\mu$m et 1 000 $\mu$m.

**3.** Procédé selon la revendication 1, dans lequel le monomère phénolique comprend le phénol et l'aldéhyde comprend le formaldéhyde, le méthylène glycol, le trioxanne, le paraformaldéhyde, ou une combinaison de ceux-ci.

**4.** Procédé selon la revendication 1, dans lequel le monomère phénolique comprend un phénol substitué, l'aldéhyde présente la formule R-CHO, dans lequel R est un hydrocarbyle présentant de 2 à 10 atomes de carbone, ou une combinaison de ceux-ci.

**5.** Procédé selon l'une quelconque des revendications 1 et 3 à 4, dans lequel un rapport molaire de l'aldéhyde sur le monomère phénolique est inférieur à 1.

6. Procédé selon l'une quelconque des revendications 1 et 3 à 5, dans lequel l'aldéhyde, le monomère phénolique, ou une combinaison de ceux-ci, comprend une solution aqueuse.

7. Procédé selon l'une quelconque des revendications 1 et 3 à 6, comprend en outre la réticulation de la résine phénolique dans l'enrobage :

8. Procédé selon l'une quelconque des revendications 1 et 3 à 7, comprenant la pulvérisation du monomère phénolique et de l'aldéhyde sur les particules.

9. Procédé selon l'une quelconque des revendications 1 et 3 à 8, dans lequel la polymérisation et/ou la réticulation (si présent) se font à une température comprise entre 50 °C et 250 °C.

10. Procédé selon l'une quelconque des revendications 1 et 3 à 9, comprenant en outre la répétition de la mise en contact et de la polymérisation une ou plusieurs fois pour former une pluralité de couches.

11. Procédé selon l'une quelconque des revendications 1 à 10, comprenant en outre le mixage des particules enrobées de résine phénolique et l'eau de mixage et le mélange de la mixture avec le ciment hydraulique.

12. Procédé selon l'une quelconque des revendications 1 à 10, comprenant en outre le mélange à sec des particules enrobées de la résine phénolique et du ciment hydraulique et le mixage du mélange sec avec l'eau de mixage.

13. Procédé selon l'une quelconque des revendications 1 à 12, dans lequel l'agent d'expansion comprend l'oxyde de calcium, l'oxyde de magnésium, l'hémihydrate de sulfate de calcium, ou une combinaison de ceux-ci.

14. Laitier de cimentation de puits comprenant le ciment hydraulique, l'eau et les particules d'un agent d'expansion enrobé d'une résine phénolique.

15. Procédé de cimentation d'un puits souterrain, comprenant :

> (i) la préparation du laitier de cimentation de puits selon la revendication 14
> (ii) le placement du laitier dans une région annulaire du puits autour d'un élément tubulaire ;
> (iii) le durcissement du laitier pour former un ciment au moins partiellement durci ; et
> (iv) l'hydratation de l'agent d'expansion pour former un ciment durci expansé à l'intérieur de la région annulaire

16. Procédé selon la revendication 15, comprenant :

> a. la préparation de la formulation de laitier de ciment proposé comprenant l'eau, le ciment et les particules d'un agent d'expansion enrobé d'une résine phénolique.
> et comprenant en outre ;
> b. la détermination que la formulation de laitier de ciment proposé présente des caractéristiques d'expansion inférieure à 50 % d'expansion relative, en fonction d'un pourcentage total d'expansion du ciment durci expansé déterminé selon API-10B-5, avant une première période de durcissement destinée à la formulation de laitier proposé, déterminée selon la norme ASTM C 191-04aC et supérieure à 50 % d'expansion relative après la période de durcissement initial pour la formulation de laitier proposé, dans lequel la période de durcissement initial, la période de durcissement final et l'expansion relative sont déterminées à une pression de fond de trou maximum et une température dans la région annulaire jusqu'à 100 °C, ou à 100 °C si la température maximale de la région annulaire est supérieure à 100 °C ; et
> c. la préparation du laitier de ciment en (i) destiné au placement (ii), au durcissement (iii) et à l'hydratation (iv) conformément à la formulation de laitier de ciment proposé affichant les caractéristiques comme déterminées en (b).

FIG. 1A

FIG. 1B

FIG. 1C

**FIG. 2**

**FIG. 3**

FIG. 4

FIG. 5

**FIG. 6**

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7988782 B
- US 20150107493 A
- US 4419136 A
- US 2465278 A
- US 3884710 A
- US 4002483 A
- US 4797159 A
- US 5942031 A
- US 6966376 B
- US 14307430 B
- US 20120175118 A1
- US 4332619 A
- US 5741357 A
- EP 2169027 A1
- EP 2246408 A
- US 7494544 B
- US 20020037306 A
- US 7670627 B
- US 20130065755 A
- US 20050123596 A
- US 20040234597 A
- US 20040109894 A
- WO 2005030174 A
- US 7722954 B
- US 6209646 B

**Non-patent literature cited in the description**

- 223R-10 Guide for the Use of Shrinkage-Compensating Concrete. American Concrete Institute, 2010